# EUROPÄISCHE PATENTSCHRIFT

(11) **EP 4 155 170 B1**
(45) Veröffentlichungstag und Bekanntmachung des Hinweises auf die Patenterteilung: **07.01.2026**
(21) Anmeldenummer: 22186616.3
(22) Anmeldetag: 25.07.2022
(51) Int. Cl.: B62D 6/00, B62D 5/04, B62D 9/00

(54) **LENKSYSTEM UND VERFAHREN ZUM BETREIBEN EINES LENKSYSTEMS**
STEERING SYSTEM AND METHOD FOR OPERATING SAME
SYSTÈME DE DIRECTION ET PROCÉDÉ DE FONCTIONNEMENT D'UN SYSTÈME DE DIRECTION

(30) Priorität: 28.09.2021 DE 102021210841
(43) Veröffentlichungstag der Anmeldung: 29.03.2023
(73) Patentinhaber: VOLKSWAGEN AG, 38440 Wolfsburg (DE)
(72) Erfinder: Liesner, Henrik, 38550 Isenbüttel (DE); Dreyer, Dirk, 31655 Stadthagen (DE)

(56) Entgegenhaltungen:
- WO-A1-2021/120508
- DE-A1- 10 135 863
- DE-A1- 102018 212 804
- DE-A1- 102019 129 032
- DE-A1- 102019 202 003
- DE-A1- 102020 100 449
- DE-B4- 102008 046 007

## Beschreibung

Die Erfindung betrifft ein Lenksystem für ein Kraftfahrzeug und ein Verfahren zum Betreiben eines solchen Lenksystems.

Aus der DE 10 2019 202 003 A1 ist ein Verfahren zur Steuerung eines Lenksystems für ein Kraftfahrzeug mit einer elektronischen Steuereinrichtung zur Ansteuerung eines auf gelenkte Räder wirkenden Lenkstellers mittels eines Stellsignals bekannt, um die gelenkten Räder gemäß einer wählbaren Zuordnungsfunktion in Abhängigkeit einer an einer Lenkhandhabe aufgebrachten Handhabestellung zu verschwenken, wobei sowohl die Handhabestellung als auch eine Lenkgeschwindigkeit der Lenkhandhabe erfasst wird. Weiter wird eine Radstellung der gelenkten Räder erfasst und eine Stellungsabweichung unter Berücksichtigung der Zuordnungsfunktion bestimmt. Wenn eine vorgebbare Mindestfahrgeschwindigkeit und/oder eine vorgebbare Mindestlenkgeschwindigkeit überschritten wird, erfolgt ein Anpassen der Radstellung durch Beaufschlagen des Stellsignals für den Lenksteller mit einem Korrektursignal, das die Stellungsabweichung mit einer vorgebbaren Korrekturfunktion reduziert. Das Lenksystem kann dabei insbesondere als steer-by-wire-System ausgebildet sein.

Aus der DE 10 2017 115 850 A1 ist ein Verfahren zur Zahnstangenpositionsregelung für ein steer-by-wire-Lenksystem bekannt, wobei ein Modul zur Regelung einer Zahnstangenposition vorgesehen ist, das in einer Feedback Struktur aus den Differenzen zwischen Soll-Werten und Schätz-Werten der Zahnstangenposition und einer Zahnstangengeschwindigkeit einen Positionsfehler ermittelt, woraus eine Stellgröße für eine Ansteuerung einer Zahnstange bestimmt wird, wobei in einer Feedforward Struktur eine Störgrößenkompensation der Stellgröße durch Zahnstangenkraftschätzung erfolgt.

Aus der DE 10 2018 122 987 A1 ist ein steer-by-wire-Lenksystem bekannt, umfassend ein Lenkradstellglied, das eine befahrene Position für ein Straßenradstellglied eines Fahrzeugs bereitstellt, das eine Zahnstange des Fahrzeugs basierend auf der vom Lenkradstellglied befahrbaren Position in eine Zahnstangenposition bewegt. Weiter weist das Lenksystem einen Controller auf, um einen Lenkradmomentbefehl zu erzeugen, wobei das Lenkradstellglied ein Rückkopplungsdrehmoment basierend auf dem Lenkradmomentenbefehl erzeugt. Der Controller berechnet einen Schleppfehler basierend auf einer Differenz zwischen der befohlenen Position und der Zahnstangenposition. Weiter wird in Abhängigkeit des Schleppfehlers ein Aufholmotordrehmomentenwert bestimmt, um den Lenkraddrehmomentbefehl unter Verwendung des Aufholmotordrehomentwertes zu modifizieren, wobei das Lenkradstellglied einen Drehmomentbetrag erzeugt, der im Wesentlichen eine Summe aus dem Rückkopplungsdrehmoment und dem Aufholmotordrehmoment ist.

Aus der DE 10 2004 034 126 A1 ist ein motorbetriebenes, lenkbares Straßenfahrzeug mit einem Steer-by-Wire-System bekannt, das ein manuell betätigbares Lenkelement, einen die Lenkposition des Lenkelements erfassenden Sensor und ein Steer-by-Wire-Element, das mit lenkbaren Rädern des Fahrzeugs zusammenwirkt, aufweist, sowie mit einem elektronischen Stabilitätsprogramm für das Fahrzeug, das in Wirkverbindung mit den Bremsen des Fahrzeugs bringbar ist und einen Gierratensensor aufweist. Bei einer Unplausibilität zwischen Sensor des Lenkelements und Gierratensensor ist eine Rückfallebene des Steer-by-Wire-Systems wirksam, die die Funktion des elektrischen Stabilitätsprogramms nutzt, um eine Lenkbewegung des Fahrzeugs entsprechend der Lenkposition des Lenkelements zu erzeugen und das Fahrzeug zum Stillstand abzubremsen.

Aus der DE 10 2018 212 804 A1 ist ein gattungsgemäßes Steer-by-Wire-Lenksystem bekannt.

Aus der DE 101 35 863 A1, der DE 10 2019 129 032 A1 sowie der DE 10 2020 100 449 A1 sind weitere Steer-by-Wire-Lenksysteme bekannt, bei denen bei Ausfall des Lenkstellers durch einseitige Bremseingriffe ein Notlenksystem realisiert wird.

Der Erfindung liegt das technische Problem zugrunde, ein Lenksystem ohne mechanische Kopplung zwischen Lenkhandhabe und einer Zahnstange weiter zu verbessern sowie ein entsprechendes Verfahren zum Betreiben eines solchen Lenksystems zur Verfügung zu stellen. Die Lösung des technischen Problems ergibt sich durch ein Lenksystem mit den Merkmalen des Anspruchs 1 sowie ein Verfahren mit den Merkmalen des Anspruchs 5. Weitere vorteilhafte Ausgestaltungen der Erfindung ergeben sich aus den Unteransprüchen.

Das Lenksystem für ein Kraftfahrzeug umfasst eine Lenkhandhabe, mindestens eine Sensorik zur Erfassung eines Lenkradwinkels an der Lenkhandhabe, mindestens ein Steuergerät zur Ermittlung eines Soll-Lenkwinkels in Abhängigkeit des Lenkradwinkels, mindestens einen Servo-Motor, wobei der Servo-Motor mit einer Zahnstange verbunden ist, und mindestens eine Sensorik zur Erfassung oder Ermittlung eines Ist-Lenkwinkels. Das Steuergerät ist derart ausgebildet, den Servo-Motor zur Einstellung des Soll-Lenkwinkels anhand mindestens einer Kennlinie anzusteuern und einen Offset zwischen Soll-Lenkwinkel und Ist-Lenkwinkel zu ermitteln, wobei die Lenkhandhabe und die Zahnstange mechanisch entkoppelt sind.

Dabei ist das Steuergerät weiter derart ausgebildet, dass bei einem Offset größer einem Schwellwert ein Steuerbefehl für einen einseitigen Bremseingriff erzeugt wird, der dem Offset entgegen wirkt. Hierdurch wird die Verfügbarkeit des Lenksystems erhöht. Der Erfindung liegt dabei folgende Erkenntnis zugrunde. Bei einer Leistungsbeschränkung des Servomotors (degradiertes System) kann in bestimmten Situationen der Ist-Lenkwinkel dem Soll-Lenkwinkel nicht so schnell folgen, sodass sich ein größerer Offset aufbaut. Insbesondere baut sich bei schnelleren Lenkbewegungen ein größerer Offset auf. Erfindungsgemäß wird nun nicht das Kraftfahrzeug kontrolliert zum Stillstand gebracht, sondern durch einen einseitigen Bremseingriff eine Lenkbewegung erzeugt, die dem Offset entgegenwirkt. Dabei kann weiter vorgesehen sein, dass ein zweiter Schwellwert für den Offset vorhanden ist, der größer als der erste Schwellwert ist, wobei bei einem Überschreiten des zweiten Schwellwerts das Kraftfahrzeug kontrolliert zum Stillstand gebracht wird.

Weiter ist das Steuergerät derart ausgebildet, eine Lenkradwinkelgeschwindigkeit zu ermitteln, wobei der Schwellwert für den Offset in Abhängigkeit der Lenkradwinkelgeschwindigkeit bestimmt wird. Dabei kann vorgesehen sein, dass bei höheren Lenkradwinkelgeschwindigkeiten der Schwellwert reduziert wird, sodass schneller der einseitige Bremseingriff zur Unterstützung erfolgt. Es kann aber auch umgekehrt der Schwellwert erhöht werden, wenn die Lenkradwinkelgeschwindigkeit sich erhöht.

In einer Ausführungsform ist das Steuergerät derart ausgebildet, anhand der Daten eines Rotorlagesensors eines Rotors des Servomotors und/oder der Daten eines Gierratensensors und/oder der Daten eines Zahnstangenpositionssensors. Das Steuergerät kennt dabei den Soll-Lenkwinkel und kann hierzu jeweils dazugehörige Soll-Daten für die Rotorlage und/oder die Gierrate und/oder die Zahnstangenposition ermitteln. Durch Vergleich mit den Ist-Werten kann daraus ein Offset zwischen Soll-Lenkwinkel und Ist-Lenkwinkel ermittelt werden. Vorzugsweise erfolgt die Bestimmung anhand der Daten des Rotorlagesensors.

In einer weiteren Ausführungsform ist der Servomotor aus zwei Halbmotoren gebildet, die einen gemeinsamen Rotor aufweisen. Dabei werden die Halbmotoren und deren jeweils zugeordnete Leistungselektronik vorzugsweise aus voneinander unabhängigen Spannungsquellen versorgt.

In einer weiteren Ausführungsform ist das Steuergerät derart ausgebildet, eine Warnmeldung zu generieren, wenn ein Steuerbefehl für einen einseitigen Bremseingriff erzeugt wird.

Das Lenksystem kann vorzugsweise als steer-by-wire-System ausgebildet sein oder aber als Lenksystem mit Überlagerungsgetriebe.

Hinsichtlich der verfahrensmäßigen Ausgestaltung kann vollinhaltlich auf die vorangegangenen Ausführungen Bezug genommen werden.

Die Erfindung wird nachfolgend anhand eines bevorzugten Ausführungsbeispiels näher erläutert. Die einzige Figur zeigt ein schematisches Blockschaltbild eines Lenksystems.

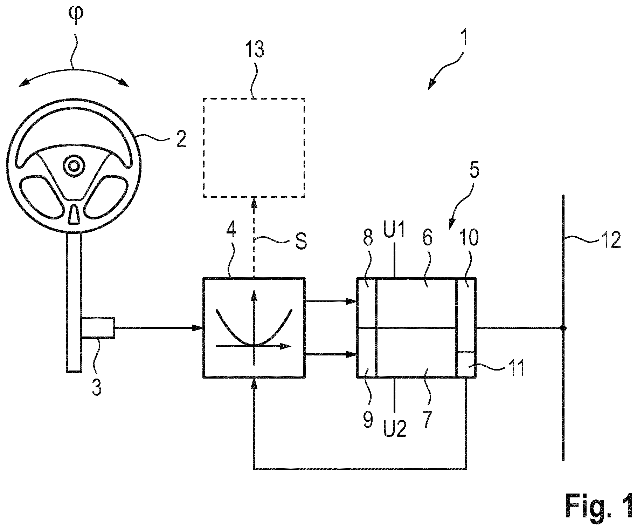

In der Fig. 1 ist schematisch ein Blockschaltbild eines Lenksystems 1 für ein Kraftfahrzeug in Form eines steer-by-wire-Lenksystems dargestellt. Das Lenksystem 1 weist eine Lenkhandhabe 2 in Form eines Lenkrades auf, dem eine Sensorik 3 zur Erfassung eines Lenkradwinkels φ zugeordnet ist. Die Sensorik 3 ist datentechnisch mit einem Steuergerät 4 verbunden. Das Steuergerät 4 steuert einen Servomotor 5 an. Der Servomotor 5 weist zwei Halbmotoren 6, 7 auf, denen jeweils eine eigene Leistungselektronik 8, 9 zugeordnet ist. Die beiden Halbmotoren 6, 7 sind symmetrisch ausgebildet. Die beiden Halbmotoren 6, 7 weisen einen gemeinsamen Rotor 10 auf, dem ein Rotorlagesensor 11 zugeordnet ist. Der Rotor 10 ist über ein nicht dargestelltes Getriebe mit einer Zahnstange 12 verbunden. Das Steuergerät 4 ermittelt mittels mindestens einer Kennlinie aus dem Lenkradwinkel φ einen Soll-Lenkwinkel an den nicht dargestellten Fahrzeugrädern. Dabei ist dem Soll-Lenkwinkel eine Zahnstangenposition zugeordnet. Über die bekannte Übersetzung kann die Zahnstangenposition in eine Rotorlage des Servomotors 5 umgerechnet werden. Die Daten des Rotorlagesensors 11 werden an das Steuergerät 4 zurückgemeldet, sodass das Steuergerät 4 einen Offset zwischen Soll-Lenkwinkel und Ist-Lenkwinkel bestimmen kann. Weiter ist dargestellt, dass der erste Halbmotor 6 und dessen Leistungselektronik 8 durch eine erste Spannungsversorgung U1 und der zweite Halbmotor 7 und dessen Leistungselektronik 9 durch eine zweite Spannungsversorgung U2 versorgt werden. Kommt es nun zum Ausfall einer Spannungsversorgung U1, U2 oder eines Halbmotors 6, 7 oder Leistungselektronik 8, 9, so steht nur noch das halbe Drehmoment am Rotor 10 zur Verfügung. Dies führt dazu, dass der Ist-Lenkwinkel nicht mehr so schnell dem Soll-Lenkwinkel folgen kann. Dies wiederum führt dazu, dass in bestimmten Lenksituationen sich ein größerer Offset zwischen Soll-Lenkwinkel und Ist-Lenkwinkel aufbaut. Übersteigt dann der Offset einen ersten Schwellwert, so erzeugt das Steuergerät 4 einen Steuerbefehl S für einen einseitigen Bremseingriff, der dem Offset entgegenwirkt. Der Bremsbefehl wird dann von einem Bremsensteuergerät 13 umgesetzt. Weiter erzeugt das Steuergerät 4 eine Warnmeldung für den Kraftfahrzeugführer, dass dieser über die eingeschränkte Leistungsfähigkeit informiert wird und gegebenenfalls eine Werkstatt aufsuchen soll. Der Schwellwert für den Offset ist dabei parametrierbar und insbesondere in Abhängigkeit der Lenkradwinkelgeschwindigkeit anpassbar. Übersteigt der Offset trotz des einseitigen Bremseingriffs einen weiteren Schwellwert, so kann das Fahrzeug kontrolliert zum Stillstand gebracht werden.

### Bezugszeichenliste

- 1: Lenksystem
- 2: Lenkhandhabe
- 3: Sensorik
- 4: Steuergerät
- 5: Servomotor
- 6, 7: Halbmotoren
- 8, 9: Leistungselektronik
- 10: Rotor
- 11: Rotorlagesensor
- 12: Zahnstange
- 13: Bremsensteuergerät

## Patentansprüche

1. Lenksystem (1) für ein Kraftfahrzeug, umfassend eine Lenkhandhabe (2), mindestens eine Sensorik (3) zur Erfassung eines Lenkradwinkels (φ) an der Lenkhandhabe (2), mindestens ein Steuergerät (4) zur Ermittlung eines Soll-Lenkwinkels in Abhängigkeit des Lenkradwinkels (φ), mindestens einen Servomotor (5), wobei der Servomotor (5) mit einer Zahnstange (12) verbunden ist, und mindestens eine Sensorik zur Erfassung oder Ermittlung eines Ist-Lenkwinkels, wobei das Steuergerät (4) derart ausgebildet ist, den Servomotor (5) zur Einstellung des Soll-Lenkwinkels anhand mindestens einer Kennlinie anzusteuern und einen Offset zwischen Soll-Lenkwinkel und Ist-Lenkwinkel zu ermitteln, wobei die Lenkhandhabe (2) und die Zahnstange (12) mechanisch entkoppelt sind, wobei das Steuergerät (4) weiter derart ausgebildet ist, dass bei einem Offset größer einem Schwellwert ein Steuerbefehl (S) für einen einseitigen Bremseingriff erzeugt wird, der dem Offset entgegen wirkt,
**dadurch gekennzeichnet, dass**
das Steuergerät (4) weiter derart ausgebildet ist, eine Lenkradwinkelgeschwindigkeit zu ermitteln, wobei der Schwellwert für den Offset in Abhängigkeit der Lenkradwinkelgeschwindigkeit bestimmt wird.

2. Lenksystem nach Anspruch 1, **dadurch gekennzeichnet, dass** das Steuergerät (4) derart ausgebildet ist, anhand der Daten eines Rotorlagesensors (11) eines Rotors (10) des Servomotors (5) und/oder der Daten eines Gierratensensors und/oder der Daten eines Zahnstangenpositionssensors den Offset zu ermitteln.

3. Lenksystem nach einem der vorangegangenen Ansprüche, **dadurch gekennzeichnet, dass** der Servomotor (5) aus zwei Halbmotoren (6, 7) gebildet ist, die einen gemeinsamen Rotor (10) aufweisen.

4. Lenksystem nach einem der vorangegangenen Ansprüche, **dadurch gekennzeichnet, dass** das Steuergerät (4) derart ausgebildet ist, eine Warnmeldung zu generieren, wenn ein Steuerbefehl (S) für einen einseitigen Bremseingriff erzeugt wird.

5. Verfahren zum Betreiben eines Lenksystems (1), wobei das Lenksystem (1) eine Lenkhandhabe (2), mindestens eine Sensorik (3) zur Erfassung eines Lenkradwinkels (φ) an der Lenkhandhabe (2), mindestens ein Steuergerät (4) zur Ermittlung eines Soll-Lenkwinkels in Abhängigkeit des Lenkradwinkels, mindestens einen Servomotor (5), wobei der Servomotor (5) mit einer Zahnstange (12) verbunden ist, und mindestens eine Sensorik zur Erfassung oder Ermittlung eines Ist-Lenkwinkels umfasst, wobei das Steuergerät (4) den Servomotor (5) zur Einstellung des Soll-Lenkwinkels ansteuert und einen Offset zwischen dem Soll-Lenkwinkel und dem Ist-Lenkwinkel ermittelt, wobei die Lenkhandhabe (2) und die Zahnstange (12) mechanisch entkoppelt sind, wobei das Steuergerät (4) bei einem Offset größer einem Schwellwert einen Steuerbefehl (S) für einen einseitigen Bremseingriff erzeugt, der dem Offset entgegenwirkt.
**dadurch gekennzeichnet, dass**
das Steuergerät (4) eine Lenkradwinkelgeschwindigkeit ermittelt, wobei der Schwellwert für den Offset in Abhängigkeit der Lenkradwinkelgeschwindigkeit bestimmt wird.

6. Verfahren nach Anspruch 5, **dadurch gekennzeichnet, dass** das Steuergerät (4) anhand der Daten eines Rotorlagesensors (11) eines Rotors (10) des Servomotors (5) und/oder der Daten eines Gierratensensors und/oder der Daten eines Zahnstangenpositionssensors den Offset ermittelt.

7. Verfahren nach einem der Ansprüche 5 oder 6, **dadurch gekennzeichnet, dass** der Servomotor (5) aus zwei Halbmotoren (6, 7) gebildet ist, die einen gemeinsamen Rotor (10) antreiben.

8. Verfahren nach einem der Ansprüche 5 bis 7, **dadurch gekennzeichnet, dass** das Steuergerät (4) eine Warnmeldung generiert, wenn ein Steuerbefehl (S) für einen einseitigen Bremseingriff erzeugt wird.

## Claims

1. Steering system (1) for a motor vehicle, comprising a steering handle (2), at least one sensor system (3), on the steering handle (2), for detecting a steering-wheel angle (φ), at least one control device (4) for determining a target steering angle according to the steering-wheel angle (φ), at least one servomotor (5), the servomotor (5) being connected to a steering rack (12), and at least one sensor system for detecting or determining an actual steering angle, the control device (4) being designed to control the servomotor (5) in order to set the target steering angle based on at least one characteristic curve and to determine an offset between the target steering angle and the actual steering angle, the steering handle (2) and the steering rack (12) being mechanically decoupled, the control device (4) being further designed such that, in the case of an offset greater than a threshold value, a control command (S) is generated for a one-sided brake intervention that counteracts the offset,
**characterized in that**
the control device (4) is further designed to determine a steering-wheel angular velocity, the threshold value for the offset being defined according to the steering-wheel angular velocity.

2. Steering system according to claim 1, **characterized in that** the control device (4) is designed to determine the offset based on the data from a rotor position sensor (11) of a rotor (10) of the servomotor (5) and/or the data from a yaw rate sensor and/or the data from a steering rack position sensor.

3. Steering system according to either of the preceding claims,
**characterized in that** the servomotor (5) is formed from two half motors (6, 7) which have a common rotor (10).

4. Steering system according to any of the preceding claims,
**characterized in that** the control unit (4) is designed to generate a warning message when a control command (S) for a one-sided brake intervention is generated.

5. Method for operating a steering system (1), the steering system (1) comprising a steering handle (2), at least one sensor system (3), on the steering handle (2), for detecting a steering-wheel angle (φ), at least one control device (4) for determining a target steering angle according to the steering-wheel angle, at least one servomotor (5), the servomotor (5) being connected to a steering rack (12), and at least one sensor system for detecting or determining an actual steering angle, the control device (4) controlling the servomotor (5) in order to set the target steering angle and determining an offset between the target steering angle and the actual steering angle, the steering handle (2) and the steering rack (12) being mechanically decoupled,
the control device (4), in the case of an offset greater than a threshold value, generating a control command (S) for a one-sided brake intervention that counteracts the offset.
**characterized in that**
the control device (4) determines a steering-wheel angular velocity, the threshold value for the offset being defined according to the steering-wheel angular velocity.

6. Method according to claim 5, **characterized in that** the control device (4) determines the offset based on the data from a rotor position sensor (11) of a rotor (10) of the servomotor (5) and/or the data from a yaw rate sensor and/or the data from a steering rack position sensor.

7. Method according to either of claims 5 or 6, **characterized in that** the servomotor (5) is formed from two half-motors (6, 7) which drive a common rotor (10).

8. Method according to any of claims 5 to 7, **characterized in that** the control device (4) generates a warning message when a control command (S) for a one-sided brake intervention is generated.

## Revendications

1. Système de direction (1) pour un véhicule automobile, comprenant une manette de direction (2), au moins un système à capteurs (3) pour la détection d'un angle de volant de direction (φ) au niveau de la manette de direction (2), au moins un appareil de commande (4) pour la détermination d'un angle de direction de consigne en fonction de l'angle de volant de direction (φ), au moins un servomoteur (5), dans lequel le servomoteur (5) est relié à une crémaillère de direction (12), et au moins un système à capteurs pour la détection ou la détermination d'un angle de direction réel, dans lequel l'appareil de commande (4) est configuré de manière à commander le servomoteur (5) pour le réglage de l'angle de direction de consigne à l'aide d'au moins une courbe caractéristique et à déterminer un décalage entre l'angle de direction de consigne et l'angle de direction réel, dans lequel la manette de direction (2) et la crémaillère de direction (12) sont désaccouplées mécaniquement, dans lequel l'appareil de commande (4) est en outre configuré de telle sorte que, en cas de décalage supérieur à une valeur seuil, une instruction de commande (S) est créée pour une intervention de freinage unilatérale qui contre le décalage,
**caractérisé en ce que**
l'appareil de commande (4) est en outre configuré de manière à déterminer une vitesse d'angle de volant de direction, dans lequel la valeur seuil pour le décalage est établie en fonction de la vitesse d'angle de volant de direction.

2. Système de direction selon la revendication 1, **caractérisé en ce que** l'appareil de commande (4) est configuré de manière à déterminer le décalage à l'aide des données d'un capteur de position de rotor (11) d'un rotor (10) du servomoteur (5) et/ou des données d'un capteur de taux de lacet et/ou des données d'un capteur de position de crémaillère de direction.

3. Système de direction selon l'une des revendications précédentes, **caractérisé en ce que** le servomoteur (5) est formé à partir de deux demi-moteurs (6, 7) présentant un rotor (10) commun.

4. Système de direction selon l'une des revendications précédentes,
**caractérisé en ce que** l'appareil de commande (4) est configuré de manière à générer un message d'avertissement lorsqu'une instruction de commande (S) pour une intervention de freinage unilatérale est créée.

5. Procédé permettant de faire fonctionner un système de direction (1), dans lequel le système de direction (1) comprend une manette de direction (2), au moins un système à capteurs (3) pour la détection d'un angle de volant de direction (φ) au niveau de la manette de direction (2), au moins un appareil de commande (4) pour la détermination d'un angle de direction de consigne en fonction de l'angle de volant de direction, au moins un servomoteur (5), dans lequel le servomoteur (5) est relié à une crémaillère de direction (12), et au moins un système à capteurs pour la détection ou la détermination d'un angle de direction réel, dans lequel l'appareil de commande (4) commande le servomoteur (5) pour le réglage de l'angle de direction de consigne et détermine un décalage entre l'angle de direction de consigne et l'angle de direction réel, dans lequel la manette de direction (2) et la crémaillère de direction (12) sont désaccouplées mécaniquement, dans lequel
l'appareil de commande (4) crée, en cas de décalage supérieur à une valeur seuil, une instruction de commande (S) pour une intervention de freinage unilatérale qui contre le décalage,
**caractérisé en ce que**
l'appareil de commande (4) détermine une vitesse d'angle de volant de direction, dans lequel la valeur seuil pour le décalage est établie en fonction de la vitesse d'angle de volant de direction.

6. Procédé selon la revendication 5, **caractérisé en ce que** l'appareil de commande (4) détermine le décalage à l'aide des données d'un capteur de position de rotor (11) d'un rotor (10) du servomoteur (5) et/ou des données d'un capteur de taux de lacet et/ou des données d'un capteur de position de crémaillère de direction.

7. Procédé selon l'une des revendications 5 ou 6, **caractérisé en ce que** le servomoteur (5) est formé à partir de deux demi-moteurs (6, 7) présentant un rotor (10) commun.

8. Procédé selon l'une des revendications 5 à 7, **caractérisé en ce que** l'appareil de commande (4) génère un message d'alerte lorsqu'une instruction de commande (S) pour une intervention de freinage unilatérale est créée.
